# EUROPEAN PATENT APPLICATION

(11) **EP 0 545 348 A1**
(43) Date of publication of application: **09.06.1993**
(21) Application number: 92120457.4
(22) Date of filing: 01.12.1992
(51) Int. Cl.: G01N 15/14

(54) **Blood cell analyzer**

(30) Priority: 06.12.1991 US 803950
(71) Applicant: CELL ANALYSIS SYSTEMS, INC., Elmhurst, Illinois 60126-4944 (US)
(72) Inventor: Bacus, James W., Hinsdale, Illinois 61257 (US)
(74) Representative: Selting, Günther, Dipl.-Ing.

(57) **Abstract**

A method and apparatus for automatically analyzing red blood cells in a blood cell sample stained to enhance selected constituents of the blood cell sample. In particular, red blood cells are analyzed to determine how many of the red blood cells contain RNA and can therefore be categorized as reticulocytes. The number of red blood cells and the number of reticulocytes are counted to determine the percentage of reticulocytes in the blood cell sample. This percentage is used as one measurable indication of the composition of the blood sample and the health of the blood donor. In addition, other attributes of the red blood cells are determined, including cell shape, pallor, and hemoglobin content. These attributes in combination with the reticulocyte percentage combines to give a complete picture of the health of the blood and consequently the blood donor.

## Description

### Background of the Invention

This invention relates to a method and apparatus for analyzing red blood cells. In particular, the invention relates to a blood cell analyzer which measures selected constituents of a blood cell sample stained to enhance the selected constituents. The stained constituents are analyzed and identified to aid in the detection of disorders of the human body which reveal themselves through measurable characteristics of red blood cells. In addition, a number of other attributes of red blood cells, including the size, shape, and pallor, are analyzed to further aid in detection of other disorders revealed through the morphology of the red blood cell.

The analysis of red blood cells extends back to the earliest development of the microscope. It has been found that the quantity of red blood cells within a blood sample, the size, the shape, and a wide variety of other cell characteristics provides an analytical tool for identifying certain diseases found in the blood and the human body which are otherwise undetectable or difficult to diagnose. For instance, in well defined anemias, the cell characteristics are markedly altered. As an example, the red blood cells found in microcytic anemias are markedly smaller and have increased central pallor. By analyzing the shape and density of the red blood cells, the specific type of anemia can be determined.

In addition, the red blood cell is made of a variety of constituents, including hemoglobin and ribonucleic acid (RNA). The detection, analysis, and identification of these constituents is used to determine the health of an individual cell, and when analyzed in quantity, indicates the healthiness of an individual. For instance, it is known that immature red blood cells (known as reticulocytes) contain RNA which is lost within the first day or two after the red blood cells leave the bone marrow. By detecting the presence of RNA in a red blood cell, a determination can be made as to the age of the individual red blood cells. By counting the number of reticulocytes in a blood sample, an approximation can be made which indicates the rate at which red blood cells are being produced and released into the blood.

Reticulocytes are revealed by staining the blood cell sample with a supravital stain. The supravital stain picks up RNA within the cell and stains it blue so that some cells will contain no color at all (mature red blood cells) and other cells will contain a blue pattern indicating immature red blood cells. By counting the number of reticulocytes and the number of mature red blood cells in a blood cell sample, the condition of the blood and therefore the individual can be determined. In a typically healthy person, the reticulocyte count or percentage of reticulocytes to the total red blood cell count is less than, or around one to two percent. Any deviation from the norm can indicate the presence of disease or injury and alerts the operator that a problem may exist.

One automated system for analyzing the morphology of red blood cells is found in Bacus, U.S Patent No. 4,199,748 (the Bacus '748 patent). This patent describes an automated method and apparatus for classifying cells with application to the diagnosis of anemia. A single camera is used in conjunction with control logic and image processing logic for analyzing the parameters of the cell characteristics to define a patient's blood. The measured characteristics include size, hemoglobin content, percentages of cells of a certain type, and other parameters such as measures of dispersion and skewness for single and combined parameters over different subpopulations as well as the population of cells as a whole. Additional information for quantitatively analyzing the morphology of red blood cells is found in a paper entitled "Quantitative Red Cell Morphology" by James W. Bacus, Monogr. clin. Cytol., vol.9, pp. 1-27 (Karger, Basel 1984) printed in Switzerland.

While the Bacus '748 patent measures many different characteristics of red blood cells, Bacus can not determine which of the red blood cells include stain enhanced constituents such as reticulocytes. Consequently, the Bacus '748 patent does not give a complete analysis of red blood cell characteristics. The detection of red blood cell constituents such as reticulocytes, and the detection of disease or injury shown thereby, is a valuable tool for blood cell analysis not shown by the Bacus '748 patent.

### Summary of the Invention

The present invention is a method and apparatus for automatically analyzing red blood cells in a blood cell sample stained to enhance selected constituents of the blood cells of the sample. The individual red blood cells are identified and counted to determine the total number of red blood cells in a sample. The red blood cells which have been stained to enhance possible constituents are also examined to determine whether the cells contain such constituents. In one example, the red blood cells are stained to enhance RNA to determine whether any red blood cells are reticulocytes. The number of red blood cells which are reticulocytes are counted and compared to the total number of red blood cells to determine the percentage of reticulocytes to red blood cells. This percentage is used as one measurable indication of the composition of the blood and consequently the health of the sample provider.

The blood cell sample is stained to enhance the RNA found in immature red blood cells. A computer controlled optical apparatus scans the blood cell sample, thereby creating an image which is subsequently converted into two images, both of which are read by either two cameras, photodiode arrays, or CCD detectors. One camera receives a first image through a 415 nanometer filter which makes the red blood cells apparent to the camera and leaves any remaining constituents of the blood sample transparent. The image containing the apparent red blood cells is analyzed for a variety of characteristics which are described in greater detail in Bacus, U.S. Patent 4,199,748, entitled "Automated Method and Apparatus for Classification of Cells with Application to the Diagnosis of Anemia" which issued April 22, 1980. This issued patent is incorporated herein by reference.

The second camera receives a second image through a 620 nanometer filter which enhances the appearance of the stained RNA and leaves any remaining constituents of the blood sample transparent. This image is analyzed to determine the location of the enhanced RNA.

Information representing the actual appearance of the red blood cells is digitized and stored in computer memory. Additional information representing the measured characteristics of the red blood cells is also generated and stored. Information representing the actual appearance of the RNA is also digitized and stored in computer memory. The digitized RNA information is compared to the digital information representing the red blood cells to determine which of the red blood cells contain RNA. When a red blood cell containing RNA is identified, information representing its appearance is also stored in memory and a cumulative count of reticulocytes is incremented.

At the conclusion of blood cell analysis, the individual blood cells may be displayed on a video screen for operator review. Each blood cell is displayed as detected by the apparatus including the color of the enhanced RNA which appears blue due to the stain used for enhancement. An operator can review the displayed cells to "fine tune" the selection process of the apparatus. An additional benefit of displaying the individual cells is that the operator can view each cell and determine whether the cell should be included in the reticulocyte count. The method and apparatus for reviewing the selected cells on a video monitor is described in greater detail in "Method and Apparatus for Automated cell Analysis", U.S. Patent Application No. , to James V. Bacus, filed on the same filing date as this application and which is incorporated herein by reference.

The cell review process enables the operator to remove identified cells from the screen. If a reticulocyte is discarded, the computer automatically updates the total cell count, the reticulocyte count, and the overall percentage of reticulocytes to total red blood cells in the total population. By removing the reticulocyte from a group of data, more accurate findings are achieved than otherwise possible.

The present invention also measures various attributes of the red blood cells such as whether the cell is a biconcave cell, a target cell, or a spherocyte cell, and other parameter more specifically recited in Bacus, U.S. Patent 4,199,748, incorporated herein by reference. By combining the features of the '748 patent to the ability to identify reticulocytes, the present invention provides a more complete analysis of the blood cell sample than previously known.

The operator can select a particular class and subclass of cells for display on the screen. For instance, spherocyte cells which contain RNA can be selected and displayed. In addition, the data indicating the quantity and percentage to total cell population for this selected combination can also be displayed. In this way, the blood cell sample can be analyzed in depth to reveal a more complete analysis than previously obtainable.

### Brief Description of the Drawings

FIG. 1 is an isometric view of an apparatus in accordance with the present invention.

FIG. 2 is a representation of an optical field of a blood sample.

FIG. 3 is a block diagram of the apparatus of FIG. 1.

FIG. 4 is a representation of an optical field of red blood cells.

FIG. 5 is a representation of an optical field of stained blue RNA contained in the red blood cell sample.

FIG. 6 is a representation of a composite image of the red blood cells and the stained blue RNA contained in a red blood sample under analysis as shown in FIGS. 4 and 5.

FIG. 7 is a flow diagram of an analysis operation performed on the blood sample of FIG. 2.

### Detailed Description of the Preferred Embodiment

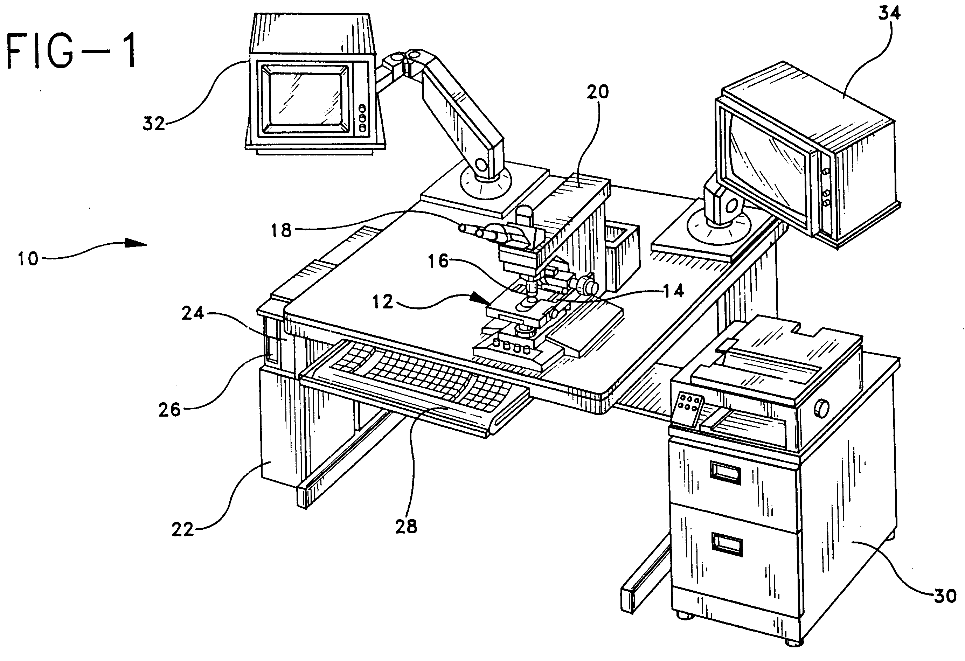

A blood cell sample, in accordance with the present invention, is analyzed when the blood cell sample is deposited on a slide and stained for reticulocytes. The slide is analyzed by an apparatus 10 as illustrated in FIG. 1. The apparatus 10 includes a microscope 12 for forming an optical image of a cell sample on a slide 14. The analysis portion of the apparatus 10 receives the image by means of an optical conversion module 20. The optical conversion module 20 records and converts the image contained on the slide into two images both of which are sent for analysis to a computer 22.

The computer 22 is also connected to a keyboard 28, a floppy disk drive 26, a printer 30, an instruction monitor 32, and a color display monitor 34 for the input and output of information. The instruction monitor 32 is used for interaction by the operator such as during a cell review session and to display a variety of reports derived from the analysis of the blood cell sample. The color display monitor 34 displays images representative of the images viewed through the microscope objective 18.

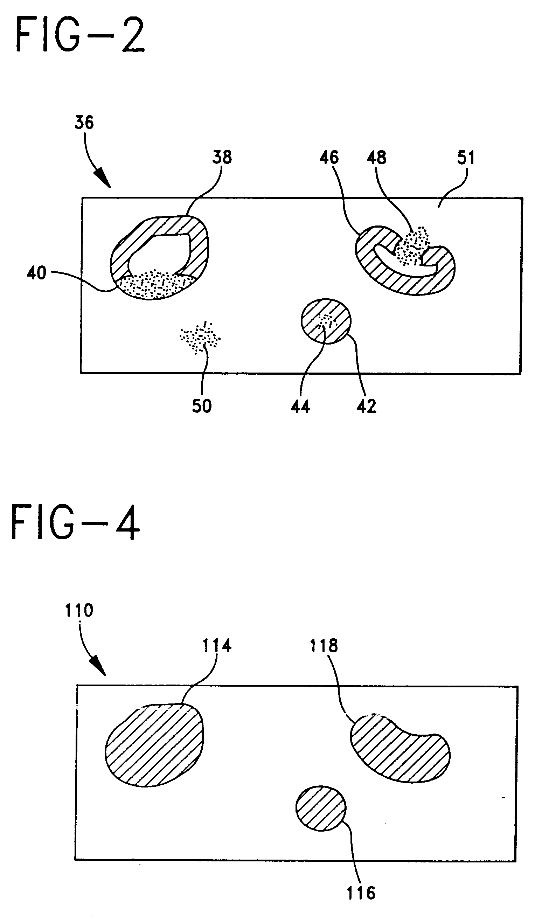

FIG. 2 is a representation of an optical field 36 of a blood sample containing red blood cells analyzed by the present invention. The present invention is used to identify and analyze red blood cells and to identify red blood cells that contain RNA, a material which indicates the age of a red blood cell. In the present embodiment, the blood cell sample is stained with a supravital stain which picks up RNA and enhances its image at approximately a 620 nanometer wavelength. Cells containing enhanced RNA appear blue and cells without RNA contain no blue color at all. It is not necessary in the present embodiment to stain the hemoglobin of the red blood cells since the hemoglobin is analyzed at approximately 415 nanometers which is the natural hemoglobin absorption wavelength. The apparatus 10 can distinguish the enhanced RNA from the red blood cells by optical filtering of different wavelength ranges.

The optical field 36 represents a view of a blood cell sample illustrating various components of the blood including individual cells. A biconcave red blood cell 38 contained within the optical field 36 is shown to contain a speckled pattern 40 which represents the RNA contained within this cell. A spherocyte red blood cell 42 is also shown containing a speckled pattern 44 which indicates that the spherocyte 42 also contains RNA. As shown, the biconcave cell 38 and the spherocyte cell 42 each contains the entire amount of the speckled pattern. In contrast, a biconcave red blood cell 46 is shown which includes a speckled pattern 48 existing both inside and outside the boundaries of the cell. A speckled pattern 50 is illustrated outside the boundaries of any individual cell. Lastly, the optical field 36 shows a background of blood constituents 51 which surrounds the individual red blood cells and the speckled patterns.

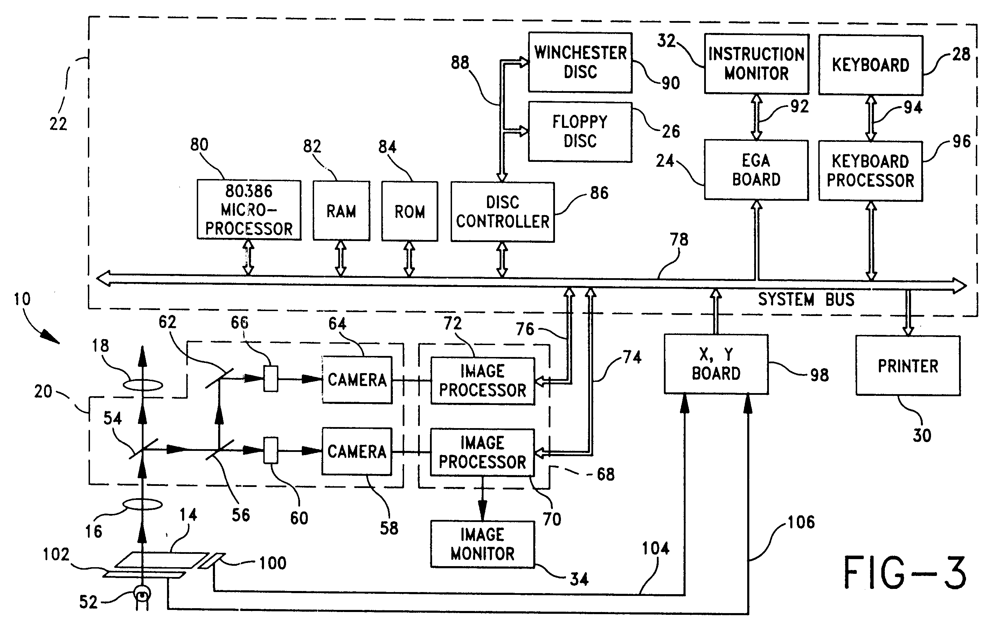

The optical field 36 is analyzed by the apparatus 10 illustrated as a block diagram in FIG. 3. The slide 14 containing the optical field 36 is placed over a source of illumination 52. Illumination from the optical field 36 is received by an objective lens 16 and transmitted to the optical conversion module 20 for processing and analysis by the computer 22. The optical conversion module 20 includes a beam splitting prism 54 which conveys approximately 90% of the light into the optical conversion module 20 and passes the remaining 10% to the microscope eyepiece 18. The light transmitted into the optical conversion module 20 is fed to a dichroic beam-splitter 56 which reflects a portion of the light to a first camera 58 through a red filter 60. The remaining portion of the light is reflected by a mirror 62 to a second camera 64 through a blue filter 66. The dichroic beam-splitter 56 selectively passes light having wavelengths greater than approximately 560 nanometers to the red filter 60 and light having wavelengths less than approximately 560 nanometers to the blue filter 66. Thus, the dichroic beam-splitter 56 acts as a first color filter before the light reaches the color filters 60 and 66.

The red filter 60 is a 620 nanometer narrow bandpass optical transmission filter. When the light passes through the red filter 60, the filter 60 preferentially blocks light from the blue stained RNA and supplies a high contrast image of the RNA to the camera 58. The blue filter 66 is a 415 nanometer narrow bandpass optical transmission filter which due to hemoglobin absorption supplies a high contrast image of the cell hemoglobin to the camera 64. Each of the cameras 58 and 64 sends an NTSC analog signal to a conversion module 68. The conversion module 68 contains two image processors. A first image processor 70 is coupled to the camera 58 which generates an image of the RNA. A second image processor 72 is coupled to the camera 64 which generates an image of the red blood cells.

Each of the image processors is a Model AT 428 from the Data Cube Corporation, and includes six internal frame buffers The image processors 70 and 72 are each coupled respectively through a first bus 74 and a second bus 76 to a system bus 78 of the computer 22. The frame buffers (not shown) for each of the image processors 70 and 72 are mapped into the address spectrum of a microprocessor 80 in the computer 22 to provide easy access for the image processing as would be understood by one skilled in the art.

The microprocessor 80 of the computer 22 is coupled to the system bus 78 and comprises an Intel 80386 microprocessor. A random access memory 82 and a read only memory 84 are also connected to the system bus 78. A disc controller 86, coupled to the system bus 78, is also connected by a local bus 88 to a Winchester disc drive 90 and to the floppy disk drive 26 which is used for secondary information storage. The video conversion board 24 is coupled to the system bus 78 and in the present embodiment comprises an EGA board having 256K bytes of memory for controlling the instruction monitor 32 coupled to the video conversion board 24 through a monitor bus 92. A variety of reports are displayed on the instruction monitor 32 for use by the operator. The keyboard 28 is coupled to the system bus 78 through a keyboard bus 94 and a keyboard processor 96. The keyboard processor 96 interprets signals from the keyboard 28. The printer 30 is also connected to the system bus 78.

An X-Y or image field board 98 is connected to the system bus 78. The image field board 98 is also coupled to the slide holder of the microscope 12 to sense the relative position of the slide 14 with respect to the microscope objective 16 and thus the field being viewed. Included is a Y position sensor 100 and an X position sensor 102. The Y position sensor 100 is coupled to the image field board 98 through a line 104 and the X position sensor 102 is coupled to the image field board 98 through a line 106. The position of the slide and its relationship to the microscope objective 16 is adjusted by the X and Y position sensors 102 and 100 either automatically by the computer 22 during operation or manually by the operator as is understood by those skilled in the art.

Analysis by the apparatus 10 illustrated in FIGS. 1 and 3 is substantially fully automated. By using the keyboard 28, the operator can specify functions such as cell review to be performed by the apparatus and can set parameters to control the operation of the automated functions. Also, from time to time, instructions and questions for the operator may be presented by the computer 22 at the instruction monitor 32. For example, at the beginning of an analysis, the operator can specify certain threshold values to be used by the apparatus to distinguish cell sample background, cell boundaries and the amount of RNA necessary to indicate whether a cell is a reticulocyte. Similarly when a report is generated, operator interaction specifies which report should be generated and whether the report should be presented to the instruction monitor 32, to the printer 30, or to both. Such human/machine interaction is well known in the art and is not described in detail herein.

The method of the instant invention is practiced by collecting a blood sample and placing the sample on the slide 14 and fixing the sample thereon. The cell sample is stained using a supravital stain which stains the RNA blue. The particular staining techniques and the resulting blood cell constituent enhancement are not critical to the present invention. For use in the present embodiment, however, RNA should be stained so that its location within the optical field 36 can be determined according to its wavelength by the apparatus 10. The red blood cells need not be stained since they can be identified at their natural absorption wavelength and differentiated from the image background and the enhanced RNA. An extensive discussion of stains and staining methods is found in James L. Bennington, "Saunders Dictionary and Encyclopedia of Laboratory Medicine and Technology" (1984) and R.D. Lillie, "H.J. Conn's Biological Satins", (9th ed. 1977).

After staining, the slide 14 is placed on the carrying stage of the microscope 12 and the objective 16 is focussed thereon either by the operator viewing the slide through the eyepiece 18 or by viewing the screen of the image monitor 34 which can be used to display the blood sample shown by the optical field 36. Once the optical field 36 has been stained, the optical field 36 is separated into two fields by the dichroic beam splitter 56, as previously described.

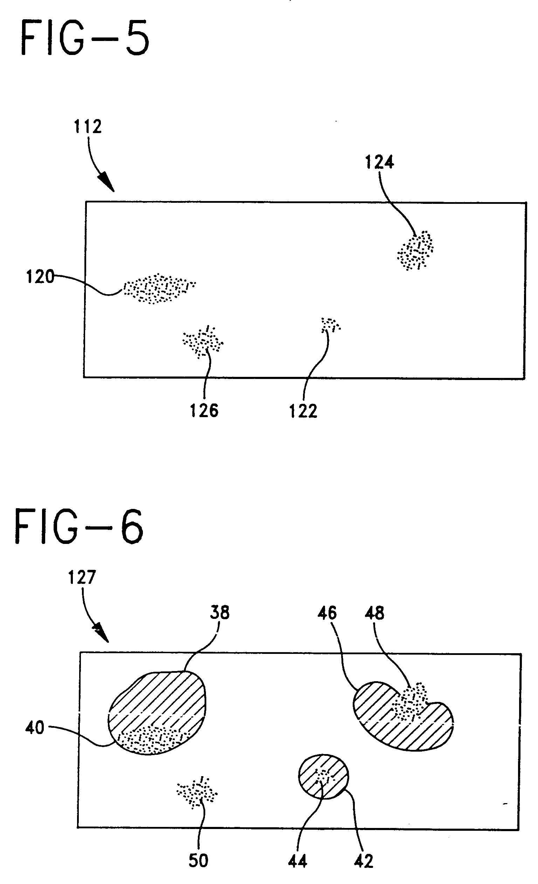

A red blood cell field 110, shown in FIG. 4, is seen by the camera 64 after passing through the blue filter 66. The other field, a blue pattern field 112, shown in FIG. 5, is seen by the camera 58 after passing through the red filter 60. Each camera records gray levels and these gray levels can be used later to restore color to the images if so desired for display on the color display monitor 34. Both the red blood cell field 110 and the blue pattern field 112 appear to include only the previously selected material. This is due to the effects of staining and electronic removal of other background material such as the background constituents 51 which appear as gray levels different than the perceived gray levels of the red blood cells and the enhanced RNA . The computer 22 distinguishes the levels of gray and does not record gray levels of certain material such as the background constituents 51 which do not contain any useful information for the present purposes.

The red blood cell field 110 contains a first, second, and third area 114, 116, and 118 each respectively corresponding to the biconcave red blood cell 38, the spherocyte 42, and the biconcave red blood cell 46. The blue pattern field 112 contains a first, second, third, and fourth blue pattern 120, 122, 124, and 126 corresponding respectively to the speckled patterns 40, 44, 48, and 50 of FIG. 2.

Both the red blood cell field 110 and the blue pattern field 112 are digitized by the conversion module 68 and their appropriate image processors 70 and 72. Once digitized, the computer 22 stores the digitized images as pixels in the random access memory 82 for further analysis and comparison. As currently embodied, one pixel is the smallest amount of area detectable by the digital imaging apparatus. To ensure that the comparison of the red blood cells to the RNA patterns is accurately made, the pixels of the red blood cell field 110 and the pixels of the blue pattern field 112 are registered pixel to pixel.

The red blood cell field 110 is analyzed to determine whether the stained identified areas 114, 116, and 118 meet certain criteria for being identified as red blood cells. In the present embodiment for example, the three areas illustrated are red blood cells. Other areas, however, may exist which do not qualify as red blood cells. This determination is made according to the teachings of Bacus, U.S. Patent 4,199,748. Besides determining which of the stained areas qualify as red blood cells, attributes of the cells are measured according to the teachings recited therein and the results stored. These additional attributes are detected, analyzed, and stored in the RAM 82 for providing a complete picture of the blood cells analyzed.

The Bacus '748 patent describes a method and apparatus for automatically classifying red blood cells. Individual red blood cells are automatically examined and classified into different subpopulations such as, for example, a spherocytic cell subpopulation, an elongated cell subpopulation, an irregular shape cell subpopulation, a target cell subpopulation, and a generally round and biconcave cell subpopulation. A plurality of characteristic values are generated for the subpopulations and the populations of cells as a whole for comparison to reference characteristic values which define abnormal and normal characteristics of the cells.

Also, a population or subpopulation dispersion measure of the red blood cells in a sample provider's blood relative to characteristics such as for example, hemoglobin, mean cell size (or area), shape, and central pallor, may also be determined and reported. For example, the bivariate red cell distribution of size and hemoglobin content for each cell can be produced. The length and width as measures of the bivariate dispersion, and the location of the profile by measures of the means values, may be reported to provide the operator with an impression or the sample provider's total cell makeup. Similarly, measures for central tendency dispersion and skewness of pallor and shape are provided to further quantify the total cell make up on the total cell populations or subpopulations.

In addition to the storage of the digitized images, one additional parameter must be specified by either the operator or as a default value in the analysis program before a reticulocyte count can be made. A threshold level value for the amount of RNA contained within a cell must be specified so that the cell can be categorized as a reticulocyte. In the present embodiment, the amount of blue contained within a cell necessary to categorize the cell as a reticulocyte is one pixel of blue information. One pixel of blue information corresponds to approximately .2 microns of cell area. The threshold level value can be preset by a default value or can be set by the operator.

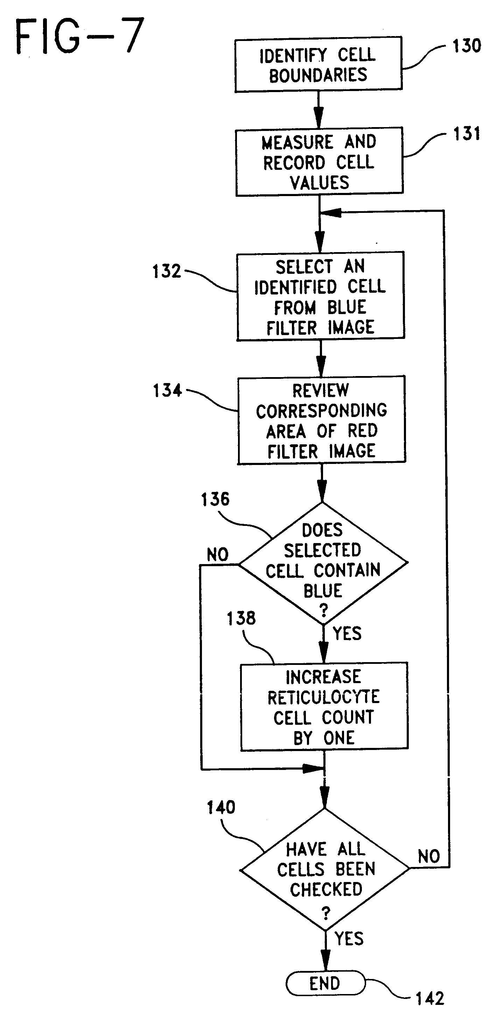

Once the red blood cell field 110 and the blue pattern field 112 have been digitized and stored, a composite image 127 is created as shown in FIG. 6. The composite image 127 is the superposition of the red blood cell field 110 and the blue pattern field 112. The composite image 127 shows which of the red blood cells contain RNA and also shows where blue speckled patterns exist outside the boundaries of the cells. The composite image 127 contains the previously mentioned red blood cells, the biconcave red blood cells 38 and 46 and the spherocyte 42. In addition to each individual cell and its boundaries being made apparent, stained blue areas also appear which correspond to the previously denoted speckled patterns 40, 42, 46, and 50. A digital image of composite image 127 is transmitted from microprocessor 80 to image processor 20 which displays the representation on monitor 34.

FIG. 7 is a flow diagram of an analysis operation performed on the optical fields shown in FIGS. 4 and 5. In step 130, the areas occupied by individual red blood cells or clusters of red blood cells are identified. Although shown as a specific step of the flow diagram of FIG. 7, this step may be performed as a part of the measurement of cell values discussed above. In the present embodiment, areas corresponding to actual cells are identified according the previously mentioned patent, Bacus, U.S. Patent 4,199,748. Once the location of the red blood cells has been determined, individual locations or pixel maps of the red blood cells within the red blood cell field 110 are stored in memory by the microprocessor 80. Additional information as to the total number of cells, the type of cell, the cell pallor, the hemoglobin level, and various other characteristics can also be measured and recorded at step 131.

Once the location of individual cells or clusters of cells are identified, a first cell is selected from the entire set of identified cells at step 132 from the red blood cell field 110 shown in FIG. 4. The selected cell exists as a group of pixels which were created during the process of digitization as would be understood by one skilled in the art. The pixels are identified by their location within the red blood cell field 110. Each individual pixel comprising the selected cell is then compared to a corresponding pixel of the blue pattern field 112 at step 134. At step 136, a decision is made as to whether the selected cell contains a blue pixel by reviewing a corresponding area of the red filter image or blue pattern field 112, since the present embodiment sets the threshold level to one pixel of blue for counting the selected cell as a reticulocyte. This threshold level could be set to any number of pixels, however, and if greater than one, the number of pixels contained within the cell would be counted until the threshold level was met as would be understood by those skilled in the art. If the selected cell does contain a blue pixel, a reticulocyte count is increased by one at step 138. Once the reticulocyte count has been incremented by one or if the selected cell does not contain any blue pixels, a decision is made at step 140 to determine whether all of the previously identified cells have been checked to see whether blue is contained therein. If all of the cells have not been checked, the analysis of the red blood cells continues by selecting another identified cell at step 132. If all the cells have been checked, the analysis of the red blood cell field 110 is completed at step 142.

Additional fields on the slide are then checked to determine whether they also contain reticulocytes. The total number of red blood cells to be checked during an analysis is either set initially by a default value stored in the computer program or is set by the operator to a desired value. Of course, by checking larger numbers of cells for RNA, the results of the analysis will be statistically more accurate. At the conclusion of the analysis, the total number of red blood cells and the total number of reticulocytes are stored in memory. In addition, the percentage of reticulocytes to red blood cells is calculated and stored. These values are used by the operator in conjunction with other measured cell values to determine whether disease or injury is present.

It should be mentioned that although the present embodiment does not require the staining of the red blood cells, such staining coupled with the use of optical techniques for enhancing the stained red blood cells could be used in other embodiments without departing from the present invention. Additionally, the described embodiment automatically analyzes one slide mounted blood sample at a time. Other slide mounting and moving apparatus such as that disclosed in copending application Serial No. 764,336 filed September 23, 1991 to Bacus for automatically analyzing a plurality of slides in a single analysis session could also be used with the present invention. Further, the present invention can also be employed to identify red blood cells constituents other than RNA such as malaria and other parasites, nuclear fragments of red blood cells or fetal hemoglobin.

Thus, there has been described herein a method and apparatus for determining the number of reticulocytes contained within a blood cell sample. The detection and cell count of reticulocytes, including the ability to analyze other features of red blood cells provides additional data important to the analysis of blood samples not realized heretofore. The foregoing description of the invention has been presented for purposes of illustration and description. It is not intended to limit the invention to the precise forms disclosed, and many modifications and variations are possible in light of the above teachings.

## Claims

1. An apparatus for automatically analyzing red blood cells in a blood cell sample stained to enhance a constituent of the red blood cell when present in the blood cell sample, said apparatus comprising:
means for producing an image of red blood cells in the blood cell sample;
means for identifying a plurality of first areas occupied by the red blood cells in said image;
means for identifying the location in said image occupied by the enhanced constituent of the red blood cell in said image; and
means responsive to said first areas and to the location of the enhanced constituents for counting the number of said first areas having the enhanced constituents therein.

2. An apparatus for automatically analyzing red blood cells in a blood cell sample stained to enhance a constituent of the red blood cell when present in the blood cell sample, said apparatus comprising:
means for receiving an image from the stained blood cell sample;
means for splitting said image into a first image and a second image;
means for identifying a plurality of first areas occupied by the red blood cells in said first image;
means for identifying a plurality of second areas occupied by the enhanced constituent in said second image;
means responsive to said first areas and said second areas for identifying a plurality of third areas comprised of said first areas which include the enhanced constituent of said second area; and
means for counting said plurality of third areas.

3. An apparatus for automatically analyzing red blood cells in a blood cell sample stained to enhance a constituent of the red blood cell when present in the blood cell sample, said apparatus comprising:
first camera means for recording a first image of the blood cell sample;
second camera means for recording a second image of the blood cell sample;
means for identifying the red blood cells in said recorded first image;
means for storing information representative of said identified red blood cells;
means for identifying the stained constituent of said second image;
means for storing information representative of said identified stained constituent;
means for comparing said information representative of said identified red blood cells to said information representative of said identified stained constituent to detect coincident information; and
means for counting the number of red blood cells containing said detected coincident information.

4. An apparatus of Claim 1, 2 or 3, further comprising:
means for displaying a representation of said image;
means for creating a combined image comprised of said identified red blood cells and said identified stained constituent having coincident information; and
means for measuring additional attributes of the red blood cells in said first area including the size of each of said first areas, the density of each of said first areas, and the shape of each of said first areas.

5. An apparatus of Claim 1, 2 or 3, wherein said enhanced constituent is RNA.

6. A method for automatically analyzing red blood cells in a blood cell sample stained to enhance a constituent of the red blood cell when present in the blood cell sample, said method comprising the steps of:
producing an image of red blood cells in the blood cell sample;
identifying a plurality of first areas occupied by the red blood cells in said image;
identifying the locations in said image occupied by the enhanced constituent of the blood cell in said image; and
responding to said first areas and the locations of the enhanced constituents by counting the number of said first areas having the enhanced constituents therein.

7. A method for automatically analyzing red blood cells in a blood cell sample stained to enhance a constituent of the red blood cell when present in the blood cell sample, said method comprising:
generating a first image of the blood cell sample;
generating a second image of the blood cell sample;
identifying the red blood cells in said recorded first image;
storing information representative of said identified red blood cells;
identifying the stained constituent of said second image;
storing information representative of said identified stained constituent;
comparing said information representative of said identified red blood cells to said information representative of said identified stained constituent to detect coincident information; and
counting the number of red blood cells containing said detected coincident information.

8. A method in Claim 6 or 7, further comprising the steps of:
displaying a representation of said image;
measuring additional attributes of the red blood cells in said first areas including the size of each of said first areas, the density of each of said first areas, and the shape of each of said first areas; and
counting the number of first areas containing an amount of RNA greater than a predetermined amount.

9. A method of Claim 6 or 7, further comprising the step of creating a combined image comprised of said identified red blood cells and said identified stained constituent having coincident information.

10. A method of Claim 6 or 7, wherein said enhanced constituent is RNA.
